# EUROPÄISCHE PATENTANMELDUNG

(11) **EP 0 905 193 A2**
(43) Veröffentlichungstag der Anmeldung: **31.03.1999**
(21) Anmeldenummer: 98118394.0
(22) Anmeldetag: 29.09.1998
(51) Int. Cl.: C08L 71/12

(54) **Polyarylenether, Styrolcopolymerisate und funktionalisierte Polymere enthaltende Formmassen**

(30) Priorität: 29.09.1997 DE 19742979
(71) Anmelder: BASF AKTIENGESELLSCHAFT, 67056 Ludwigshafen (DE)
(72) Erfinder: Weber, Martin, Dr., 67487 Maikammer (DE); Elbl-Weiser, Karin, Dr., 69198 Schriesheim (DE)
(74) Vertreter: Isenbruck, Günter, Dr.

(57) **Zusammenfassung**

Die Formmasse enthält, bezogen auf das Gesamtgewicht der Komponenten A bis D und gegebenenfalls E bis G, das insgesamt 100 Gew.-% ergibt,
a: 1 bis 97 Gew.-% mindestens eines Polyarylenethers, der wiederkehrende Einheiten der allgemeinen Formel (I) 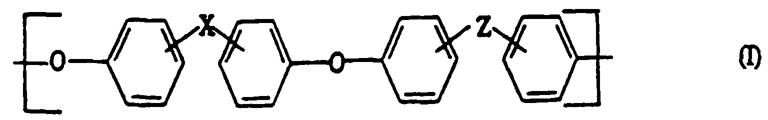 oder entsprechenden mit C₁₋₆-Alkyl, C₁₋₆-Alkoxy, Aryl, Chlor oder Fluor kernsubstituierten Einheiten, wobei
   - -X-: -SO₂-, -SO-, -O-,-CO-, -N=N-, -RC=CR^{a}-, -CR^{b}R^{c}- oder eine chemische Bindung sein kann und
   - -Z-: ausgewählt ist aus
   -SO₂-, -SO-,-CO-
   -N=N- und -RC=CR^{a}-,
   wobei
   R und R^{a} jeweils Wasserstoff oder C₁₋₆-Alkyl darstellen,
   R^{b} und R^{c} jeweils Wasserstoff oder C₁₋₆-Alkyl, C₄₋₁₀-Cycloalkyl, C₁₋₆-Alkoxy oder Aryl oder jeweils deren Fluor- oder Chlorderivate sein können,
      enthält, als Komponente A,
b: 1 bis 20 Gew.-% mindestens eines Carboxylgruppen enthaltenden Polyarylenethers als Komponente B,
c: 1 bis 97 Gew.-% mindestens eines thermoplastischen Styrolcopolymerisats als Komponente C,
d: 1 bis 10 Gew.-% mindestens eines thermoplastischen Styrolcopolymerisats, das gegenüber Carboxylgruppen reaktionsfähige funktionelle Gruppen aufweist, als Komponente D,
e: 0 bis 50 Gew.-% mindestens eines schlagzähmodifizierenden Kautschuks als Komponente E,
f: 0 bis 60 Gew.-% Verstärkungsmittel und/oder Füllstoffe als Komponente F und
g: 0 bis 50 Gew.-% weiterer Zusatzstoffe als Komponente G.

## Beschreibung

Die Erfindung betrifft Polyarylenether, Styrolcopolymerisate und funktionalisierte Polymere enthaltende Formmassen, Verfahren zu ihrer Herstellung, ihre Verwendung und Formkörper, Fasern und Folien daraus.

Polymerblends aus Polyarylerethern und Styrolcopolymeren, wie ABS (Acrylnitril-Butadien-stryrol-Copolymerisate), ASA (Acrylnitril-Styrol-Acrylat-Copolymerisate) oder AES (Acrylnitril-Ethylen(copolymere)-Copolymerisate), zeichnen sich durch gute Fließfähigkeit und Schlagfestigkeit aus. Die Nachteile der reinen, hochtemperaturbestädigen Polyarylenether, wie Feuchtigkeitsaufnahme, geringe Fließfähigkeit und Kerbschlagzähigkeit werden vermieden, wobei andererseits die erwünschten Eigenschaften der Polyarylenether, wie gute mechanische Eigenschaften, gute thermische Bestädigkeit und gute Dimensionsstabilität erhalten bleiben.

In der US 3,555,119 sind thermoplastische Harzblends aus einem Polysulfon und ABS beschrieben. Es wird beschrieben, daß die Blends hochtemperaturbeständig sind und gleichzeitig gute Fließeigenschaften und gute Schlagzähigkeit aufweisen.

In der EP-A-0 375 961 sind schlagzähe, thermoplastische Polyethersulfon-Formmassen beschrieben, die neben einer hohen Kerbschlagzähigkeit auch ein ausreichend hohes Niveau der Bindenahtfestigkeit aufweisen. Sie enthalten ein aromatisches Polyethersulfon, ein Styrol-Acrylnitril-Copolymer und einen Dienkautschuk.

In der DE-A-36 01 418 sind thermoplastische Formmassen auf Basis von Polysulfonharzen, Polycarbonaten, Styrol und Acrylnitril enthaltenden Copolymerisaten und einem Pfropfmischpolymerisat beschrieben. Sie weisen von der Verarbeitung unabhängige Zähigkeitswerte auf.

In der DE-A-36 01 419 sind thermoplastische Formmassen auf Basis von Polysulfonharzen und einem Pfropfmischpolymerisat beschrieben. Sie weisen ehenfalls gute mechanische Eigenschaften unabhängig vom Verarbeitungsvorgang auf.

In der EP-A-0 361 400 sind eine thermoplastische Harzzusammensetzung und ein Verfahren zu ihrer Herstellung beschrieben. Das Harz enthält neben einem Polysulfon oder Polyethersulfon ABS und ein thermoplastisches Harz mit Multiphasenstrukur, das ein Epoxygruppen enthaltendes olefinisches Polymer und ein vinylisches Polymer oder Copolymer enthält. Die Formmassen weisen eine verbesserte Schlagzähigkeit auf.

Die bekannten Blends aus Polyarylenethern und Styrolcopolymeren weisen aber in vielen Anwendungen ein unzureichendes Eigenschaftsprofil auf, weshalb sie sich am Markt nicht durchsetzen konnten.

Aufgabe der vorliegenden Erfindung ist die Bereitstellung von hochtemperaturbeständigen thermoplastischen Formmassen, die Polyarylenether und Styrolcopolymerisate enthalten und eine verbesserte Zähigkeit, Fließfähigkeit und Beständigkeit gegenüber Feuchtigkeit, insbesondere bei hohen Temperaturen, aufweisen.

Die Aufgabe wird erfindungsgemäß gelöst durch Bereitstellung einer Formmasse, enthaltend, bezogen auf das Gesamtgewicht der Komponenten A bis D und gegebenenfalls E bis G, das insgesamt 100 Gew.-% ergibt,
a: 1 bis 97 Gew.-% mindestens eines Polyarylenethers, der wiederkehrende Einheiten der allgemeinen Formel (I) 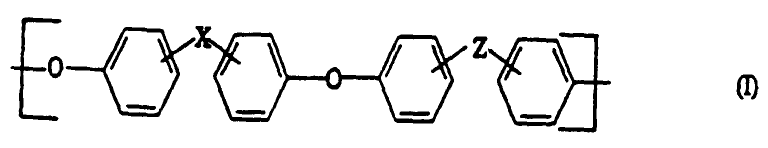 oder entsprechenden mit C₁₋₆-Alkyl, C₁₋₆-Alkoxy, Aryl, Chlor oder Fluor kernsubstituierten Einheiten, wobei
   - -X-: -SO₂-, -SO-, -O-, -CO-, -N=N-, -RC=CR^{a}-, -CR^{b}R^{c}- oder eine chemische Bindung sein kann und
   - Z: ausgewählt ist aus
   -SO₂-, -SO-,-CO-
   -N=N- und -RC=CR^{a}-,
   wobei
   R und R^{a} jeweils Wasserstoff oder C₁₋₆-Alkyl darstellen,
   R^{b} und R^{c} jeweils Wasserstoff oder C₁₋₆-Alkyl, C₄₋₁₀-Cycloalkyl, C₁₋₆-Alkoxy oder Aryl oder jeweils deren Fluor- oder Chlorderivate sein können,
      enthält, als Komponente A,
b: 1 bis 20 Gew.-% mindestens eines Carboxylgruppen enthaltenden Polyarylenethers als Komponente B,
c: 1 bis 97 Gew.-% mindestens eines thermoplastischen Styrolcopolymerisats als Komponente C,
d: 1 bis 10 Gew.-% mindestens eines thermoplastischen Styrolcopolymerisats, das gegenüber Carboxylgruppen reaktionsfähige funktionelle Gruppen aufweist, als Komponente D,
e: 0 bis 50 Gew.-% mindestens eines schlagzähmodifizierenden Kautschuks als Komponente E,
f: 0 bis 60 Gew.-% Verstärkungsmittel und/oder Füllstoffe als Komponente F und
g: 0 bis 50 Gew.-% weiterer Zusatzstoffe als Komponente G.

Erfindungsgemäß wurde gefunden, daß durch Einsatz von funktionalisierten Polyarylenethern und Styrolcopolymerisaten das Eigenschaftsprofil der Formmassen verbessert werden kann.

Nachstehend werden zunächst die einzelnen Komponenten der erfindungsgemäßen Formmassen beschrieben.

Die Gewichtsangaben für die nachstehend aufgeführten Komponenten A - G beziehen sich dabei auf das Gesamtgewicht der Komponenten A - G, das insgesamt 100 Gew.-% ergibt.

### Komponente A

Die erfindungsgemäßen Formmassen enthalten als Komponente A 1 bis 97, bevorzugt 30 bis 87 Gew.-% Polyarylenether. Insbesondere sind die Polyarylenether A in Mengen von 44 bis 74 Gew.-% in den erfindungsgemäßen Formmassen enthalten.

Als Komponente A werden Polyarylerether mit wiederkehrenden Einheiten der allgemeinen Formel (I) 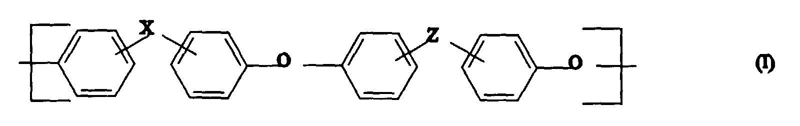 eingesetzt. Ebenso können deren kernsubstituierte Derivate verwendet werden. Als Substituenten kommen vorzugsweise C₁₋₆-Alkyl, wie Methyl, Ethyl, n-Propyl, i-Propyl, n-Butyl, i-Butyl oder t-Butyl, C₁₋₆-Alkoxy wie Methoxy oder Ethoxy, Aryl, insbesondere Phenyl, Chlor oder Fluor in Betracht. Die Variable -X- kann - SO₂-, -SO-, -O-, -CO-, -N=N-, -RC=CR^{a}-, -CR^{b}R^{c}- oder eine chemische Bindung sein. Die Variable -Z- kann für -SO₂-, SO-, -N=N- oder -RC=CR^{a}-, stehen. Hierbei stellen R und R^{a} jeweils Wasserstoff, C₁₋₆-Alkyl, z.B. Methyl, Ethyl, n-Propyl i-Propyl oder n-Hexyl, C₁₋₆-Alkoxy, darunter Methoxy, Ethoxy, n-Propoxy, i-Propoxy, oder n-Butoxy, oder Aryl, insbesondere Phenyl dar. Die Reste R^{b} und R^{c} können jeweils Wasserstoff oder eine C₁₋₆-Alkylgruppe, inbesondere Methyl, darstellen. Sie können aber auch zu einem C₄- bis C₁₀-Cycloalkylring wie Cyclopentyl- oder Cyclohexylring miteinander verknüpft sein, der seinerseits mit einer oder mehreren Alkylgruppen, vorzugsweise Methyl substituiert sein kann. Daneben können R^{b} und R^{c} auch eine C₁₋₆-Alkoxygruppe, z.B. Methoxy oder Ethoxy oder eine Arylgruppe, insbesondere Phenyl, darstellen. Die vorgenannten Gruppen können ihrerseits jeweils mit Chlor oder Fluor substituiert sein. Die Polyarylenether können vollständig aus den wiederkehrenden Einheiten der allgemeinen Formel (I) aufgebaut sein.

Die Molekulargewichte (Zahlermittel Mₙ) geeigneter Polyarylenether A liegen im allgemeinen im Bereich von 1500 bis 60 000 g/mol.

Zu den geeigneten Polyarylenethern A zählen auch Copolymere, aufgebaut aus Polyarylenethersegmenten und Struktureinheiten, ausgewählt aus der Gruppe der Polyester, aromatischen Polycarbonate, Polyestercarborate, Polysiloxane, Polyimide, Polyamidimide und Polyetherimide. Die Molekulargewichte M_{w} der Polyaryletherblöcke bzw. der Polyaryletherpfropfarme in derartigen Copolymeren liegen im allgemeinen im Bereich von 1000-30 000 g/mol. Die Blöcke unterschiedlicher Struktur können in den Copolymeren alternierend oder statistisch angeordnet sein. Der Gewichtsanteil der Polyarylenether in den Copolymeren beträgt im allgemeinen 3 bis 97, vorzugsweise 10 bis 90 und insbesondere 20 bis 80 Gew.-%.

Es können auch Mischungen verschiedener Polyarylenether A verwendet werden.

Einige geeignete wiederkehrende Einheiten sind im folgenden aufgeführt:

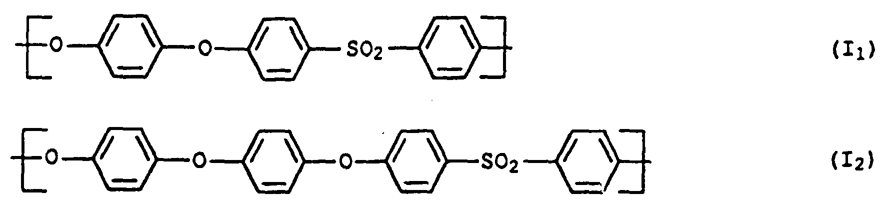

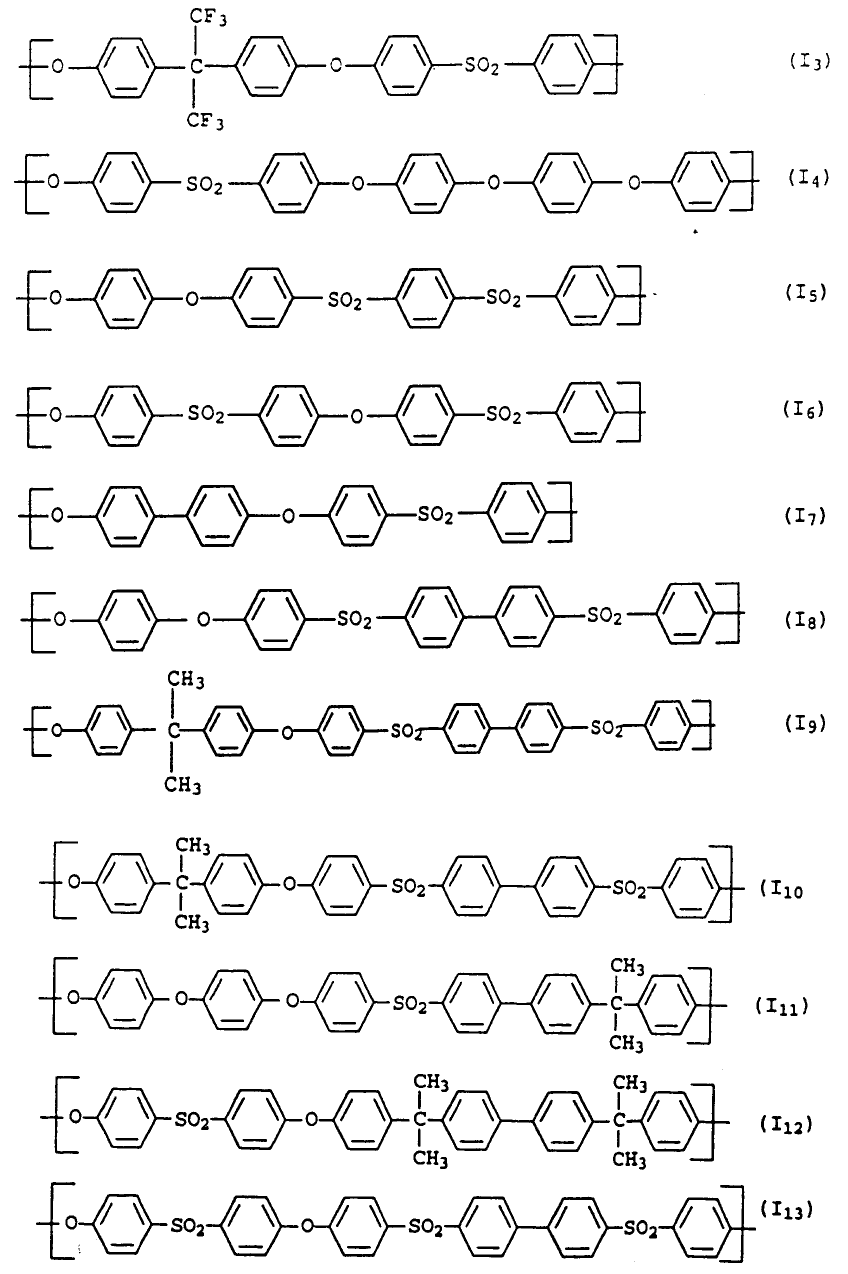

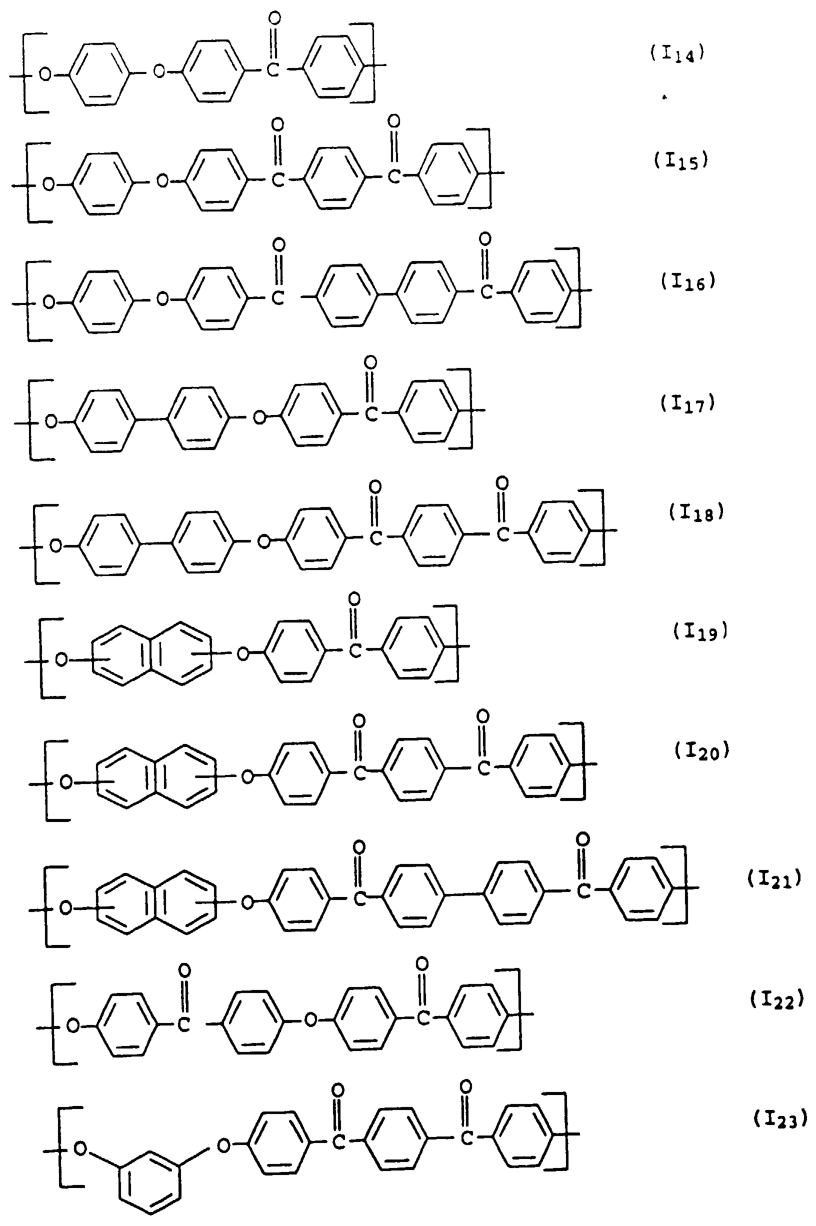

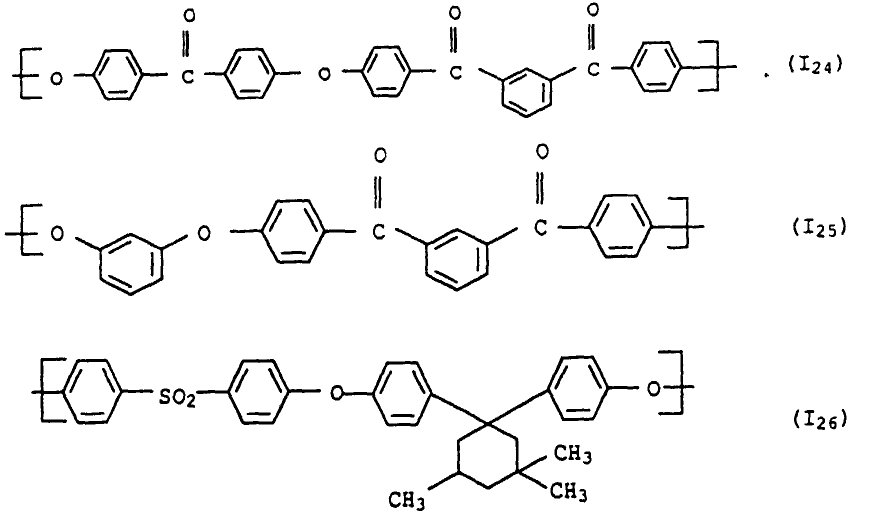

Zu den besonders bevorzugten Polyarylenethern A zählen solche mit
a1) 0 bis 100 Mol-% wiederkehrenden Einheiten der Formel (II): 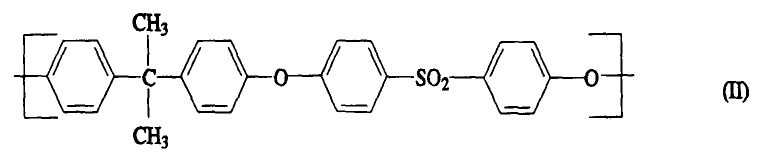 und
a2) 0 bis 100 Mol-% wiederkehrenden Einheiten der Formel (III), 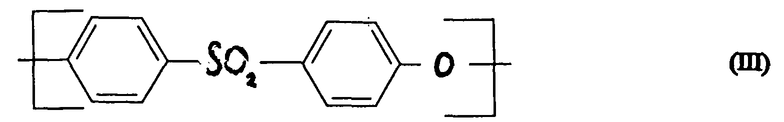 wobei sich die Molprozentangabe auf den Gehalt an SO₂ Gruppen bezieht. Besonders bevorzugt werden die Polyarylenether A mit 3 bis 97 Mol-% wiederkehrenden Einheiten der Formel (II) und 3 bis 97 Mol-% wiederkehrenden Einheiten der Formel (III).

Die Herstellung von Polyarylenethern ist allgemein bekannt (siehe z.B. GB-A-1 152 035; US 4,870,153; WO 84/03891), ebenso die Herstellung von Polyarylenethern mit Blockstruktur (DE-A-37 42 264). Methoden zur Synthese von Copolymeren sind z.B. bei A. Noshay et al. Block Copolymers, Academic Press, New York 1977, beschrieben.

Besonders geeignet ist die Umsetzung von monomeren Dihydroxy- mit Dihalogenverbindungen in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Base oder die Umsetzung in der Schmelze. Daneben eignet sich die Umsetzung von Säurechloriden mit aromatischen Verbindungen mit abstrahierbaren Wasserstoffatomen in Gegenwart von Lewissäuren wie Aluminiumtrichlorid.

Polyarylenether A mit Hydroxyendgruppen können beispielsweise durch geeignete Wahl des molaren Verhältnisses zwischen Dihydroxy- und Dichlormonomeren hergestellt werden (siehe z.B. McGrath et al, Polym. Eng. Sci. 17, 747 (1977); Elias "Makromoleküle", 4. Aufl. (1981), Seiten 490 bis 493, Hütig & Wepf.-Verlag, Basel).

### Komponente B

Der Anteil der Komponente B der Carboxygruppen-enthaltenden Polyarylenether in den erfindungsgemäßen thermoplastischen Formmassen beträgt 1 bis 20, vorzugsweise 1,5 bis 15, insbesondere 3 bis 12 Gew.-%.

Komponente B ist wenigstens ein modizizierter, Carboxylgruppen-haltiger Poylarylenether mit wiederkehrenden Strukturelementen der Formel (V) und (VI). 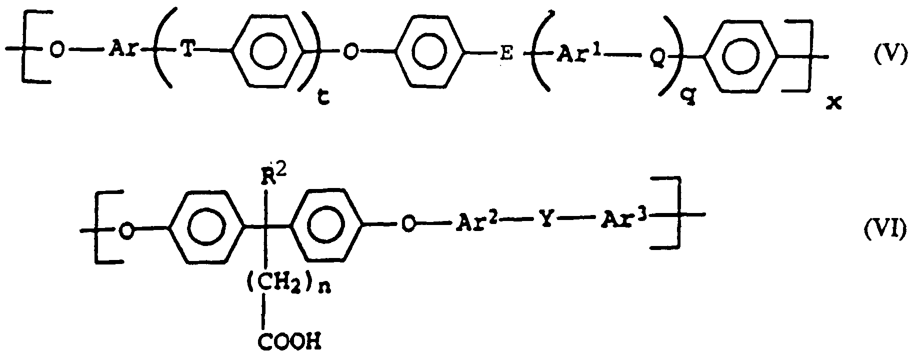 worin
x für 0,5 oder 1 steht,
t und q unabhängig voneinander für 0, 1, 2 oder 3 stehen,
n für eine ganze Zahl von 0 bis 6 steht,
-Q-, -T-, -Y- und -E- unabhängig voneinander jeweils eine chemische Bindung oder eine Gruppe, ausgewählt unter -O-, -S-, -SO₂-, S=O, C=O, -N=N-, -R^{d}C=CR^{e}- und -CR^{f}R^{g}-,
   bedeuten, wobei
R^{d} und R^{e} unabhängig voneinander jeweils für ein Wasserstoffatom oder C₁₋₁₂-Alkyl stehen und R^{f} und R^{g} unabhängig voneinander jeweils für ein Wasserstoffatom oder C₁₋₁₂-Alkyl, C₁₋₁₂-Alkoxy oder C₆₋₁₈-Aryl stehen, wobei R^{f} und R^{g} gegebenenfalls unabhängig voneinander mit Fluor- und/oder Chloratomen substituiert sind oder gegebenenfalls zusammen mit dem C-Atom, an das sie gebunden sind, eine C₃₋₁₂-Cycloalkylgruppe bilden, die gegebenenfalls mit einer oder mehreren
C₁₋₆-Alkylgruppen substituiert ist,
   mit der Maßgabe, daß mindestens eine der Gruppen -T-, -Q- und -E- für -SO₂- oder C=O steht und, wenn t und q für 0 stehen, E für -SO₂- oder C=O steht,
   - Ar,: Ar¹, Ar² und Ar³ unabhängig voneinander für C₆₋₁₈-Arylen stehen, wobei diese gegebenenfalls mit C₁₋₁₂-Alkyl, C₆₋₁₈-Aryl, C₁₋₁₂-Alkoxy oder Halogenatomen substituiert sind,
   - R¹: für H, C₁₋₆-Alkyl, oder -(CH₂)ₙ-COOH steht; und
   wobei das molare Verhältnis von Einheiten der Formel (V) zu Einheiten der Formel (VI) im Bereich von 0,05:99,95 bis 99,95:0,05 liegt.

Erfindungsgemäß bevorzugt sind solche modifizierten Polyarylenether (Komponente B), die einen Anteil an freie Säuregruppen enthaltenden Einheiten der Formel (VI) von etwa 0,05 bis etwa 25 Mol-%, bestimmt durch ¹H-NMR, aufweisen.

Weiterhin bevorzugt sind modifizierte Polyarylenether (Komponente B), welche Strukturelemente der Formel VI umfassen, worin Ar² und Ar³ jeweils für 1,4-Phenylen stehen, Y für SO₂, R¹ für C₁₋₆-Alkyl und n für eine ganze Zahl von 1 bis 6 steht.

Erfindungsgemäß verwendbare Alkylreste umfassen geradkettige oder verzweigte, gesättigte Kohlenstoffketten mit bis zu 12 Kohlenstoffatomen. Beispielsweise können folgende Reste genannt werden: C₁₋₆-Alkylreste, wie Methyl, Ethyl, n-Propyl, i-Propyl, n-Butyl, sec. -Butyl, 2- oder 3-Methyl-pentyl; und längerkettige Reste, wie unverzweigtes Heptyl, Octyl, Nonyl, Decyl, Undecyl, Lauryl und die ein- oder mehrfach verzweigten Analoga davon.

Der Alkylteil von erfindungsgemäß brauchbaren Alkoxygruppen ist wie oben angegeben definiert.

Erfindungsgemäß verwendbare Cycloalkylreste umfasssen insbesondere C₃₋₁₂-Cycloalkylreste, wie Cyclopropyl, Cyclobutyl, Cyclopentyl, Cyclohexyl, Cycloheptyl, Cyclooctyl, Cyclopropylmethyl, Cyclopropylethyl, Cyclopropyl-propyl, Cyclobutylmethyl, Cyclobutylethyl, Cyclopentylethyl, -propyl, -butyl, - pentyl, -hexyl, Cyclohexylmethyl, dimethyl, -trimethyl und dergleichen.

Beispiele für erfindungsgemäß brauchbare C₆₋₁₈-Arylengruppen sind Phenylengruppen, wie 1,2-, 1,3- und 1,4-Phenylen, Naphthylengruppen, wie 1,6-, 1,7-, 2,6- und 2,7-Naphthylen, sowie die von Anthracen, Phenanthren und Naphthacen abgeleiteten Brückengruppen.

Die in den erfindungsgemäßen Formaassen als Verträglichkeitsvermittler verwendeten, seitenständig carboxylierten Polyarylenether (Komponente B), umfassend die Strukturelemente der Formeln (V)und (VI), sind an sich bekannte Verbindungen oder nach bekannten Verfahren herstellbar.

Beispielsweise sind die erfindungsgemäß modifizierten Polyarylenether zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach: beispielsweise erhältlich durch Polykondensation von Verbindungen der allgemeinen Formel (VII) 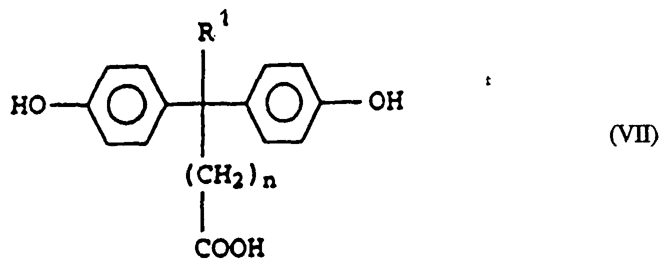 worin R¹ und n die oben angegebenen Bedeutungen besitzen, mit wenigstens einer weiteren, z.B. chlorfunktionalisierten aromatischen Verbindung, wie Bis-(4-chlophenyl)sulfon, und gegebenenfalls weiteren hydroxyfunktionalisierten Verbindungen, wie Bisphenol A und/oder Bisphenol S. Geeignete Reaktionspartner sind dem Fachnann bekannt.

Beispiele für geeignete Strukturelemente der allgemeinen Formel (VI) sind: 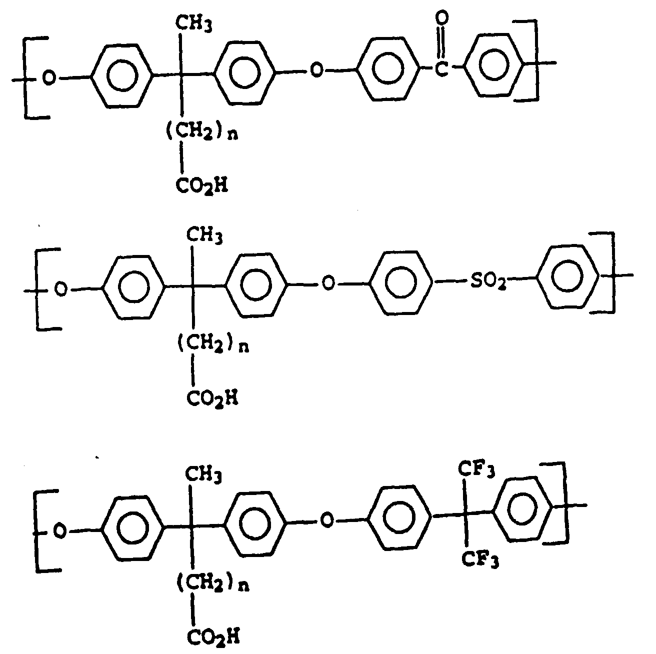 worin n jeweils für eine ganze Zahl von 0 bis 6 steht.

Die erfindungsgemäß verwendeten säuregruppenhaltigen Polyarylenether B weisen Viskositätszahlen von etwa 15 bis 80 ml/g auf (bestimmt in 1 %iger NMP-Lösung bei 25°C). Der Anteil freier Säuregruppen in der Komponente B beträgt 0,05 bis 25, vorzugsweise 0,1 bis 20 und insbesondere 0,1 bis 15 Mol-%, wobei die Bestimmung des Anteils an Säuregruppen, wie bei I.W. Parsons et al., Polymer, 34, 2836 (1993) beschrieben, durch ¹H-NMR erfolgt.

Es können verschiedene Einheiten der Formel (V) statistisch oder in Blöcken verteilt im Polyarylenether vorliegen.

Die Herstellung erfindungsgemäß brauchbarer Poylarylenether B kann beispielsweise in Anlehnung an GB-A-1 152 035 und US 4,870,153 erfolgen. Geeignete Verfahrensbedingungen zur Synthese von Polyarylenethern sind beispielsweise in EP-A-0 113 112 und EP-A-0 135 130 beschrieben. Besonders geeignet ist wie bei der Herstellung der Komponente A die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Beispiele für geeignete Polyarylenether B sind solche mit mindestens einer der folgenden wiederkehrenden Struktureinheiten I₂₇ oder I₂₈ 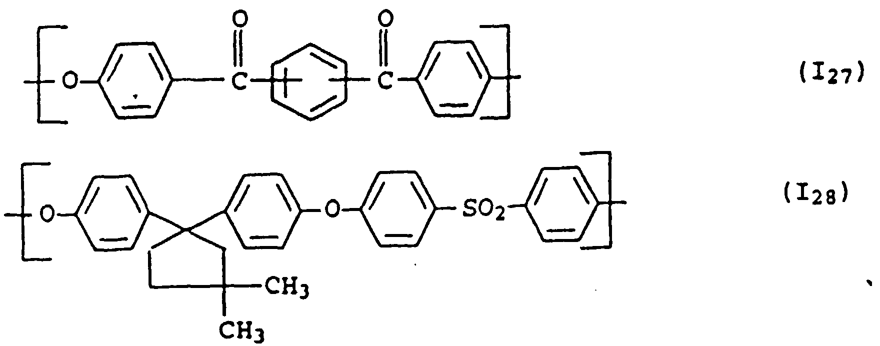 oder den Struktureinheiten der Formeln I₁ bis I₋₂₆ II und III, die bei Komponente A beschrieben sind.

Als besonders bevorzugte Einheiten der Formel I sind zu nennen Einheiten der Formeln II und III, welche einzeln oder im Gemisch vorliegen können.

Die säuregrupperhaltigen Polyarylenether weisen Viskositätszahlen von 15 bis 80 ml/g auf (bestimmt in 1 %-iger NMP-Lösung bei 25°C).

Der Anteil freier Säuregruppen in der Komponente B beträgt 0,05 bis 25, vorzugsweise 0,1 bis 20 und insbesondere 0,1 bis 15 mol-%, wobei die Bestimmung des Anteils an Säuregruppen wie bei I.W. Parsons et al., Polymer, 34, 2836 (1993) beschrieben durch ¹H-NMR erfolgt.

### Komponente C

Als Komponente C enthalten die erfindungsgemäßen Formmassen 1 bis 97, vorzugsweise 10 bis 67 und insbesondere 20 bis 50 Gew.-% eines thermoplastischen Styrolcopolymerisats. Das thermoplastische Styrolcopolymerisat kann vorzugsweise aufgebaut sein aus
c1) etwa 50 bis 95 Gew.-%, vorzugsweise etwa 60 bis 80 Gew.-% Styrol oder substituierten Styrolen der nachstehenden allgemeinen Formel (IV) oder deren Mischungen, 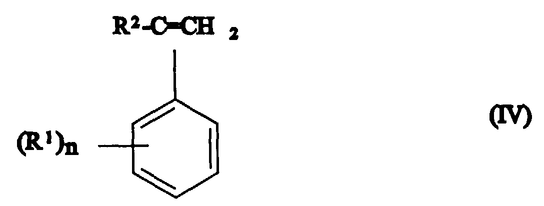 wobei R² einen Alkylrest mit 1 bis 8 C-Atomen, ein Wasserstoffatom oder Halogen und R¹ Alkylreste mit 1 bis 8 C-Atomen oder ein Halogenatom darstellen und n den Wert 0, 1, 2 oder 3 hat,
c2) etwa 5 bis 50 Gew.-%, vorzugsweise etwa 20 bis 40 Gew.-% Acrylnitril, Methacrylnitril, Methylmethacrylat, Maleinsäureanhydrid oder deren Mischungen.

Diese Copolymerisate C sind harzartig, thermoplastisch und kautschukfrei. Besonders bevorzugte derartige Copolymerisate C sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid. Es können auch mehrere der beschriebenen Copolymere gleichzeitig eingesetzt werden.

Solche Copolymerisate entstehen häufig bei der Pfropfpolymerisation zur Herstellung der nachstehenden Variante der Komponente C als Nebenprodukte, besonders dann, wenn große Mengen Monomere auf kleine Mengen Kautschuk gepfropft werden.

Diese Copolymerisate C sind an sich bekannt und lassen sich durch radikalische Polymerisation, inbesondere durch Emulsions-, Suspensions-, Lösungs- und Massepolymerisation herstellen. Sie weisen Viskositätszählen im Bereich von etwa 40 bis 160 ml/g auf, dies entspricht mittleren Molekulargewichten M_{w} (Gewichtsmittelwert) von etwa 40 000 bis 2 000 000.

Als Komponente C ebenfalls einsetzbare ABS- oder ASA-Polymerisate sind ganz allgemein Mischungen aus Pfropfpolymerisaten mit einer "weichen" Pfropfgrundlage, deren Glasübergangstemperatur (T_{g}) im Regelfall unter 10°C liegt und einer darauf aufgepfropften Hülle aus Monomeren, deren Polymerisate eine Glasübergangstemperatur von im allgemeinen mehr als 25°C aufweisen. Daneben enthalten ABS- bzw. ASA-Polymerisate im allgemeinen noch Copolymere aus den Monomeren, die die Pfropfhülle des Pfropfcopolymerisats bilden, als sogenannte "Hartkomponente".

ABS- und ASA-Polymerisate unterscheiden sich im wesentlichen in der chemischen Zusammensetzung der Pfropfgrundlage - in ASA-Polymerisaten werden Acrylatkautschuke eingesetzt, in ABS-Polymerisaten Dienkautschuke, insbesondere auf der Basis von Butadien.

Nachfolgend sind einige bevorzugte ASA-Polymerisate detaillierter beschrieben; die entsprechenden Ausführungen gelten auch für ABS-Polymerisate, wenn als Komponenten für die Pfropfgrundlage statt Acrylsäureestern Butadien oder Mischungen aus Butadien und Styrol, Acrylnitril oder kleineren Anteilen weiterer copolymerisierbarer Monomere eingesetzt werden. Die zwingende Mitverwendung der als Vernetzer fungierenden Monomeren p12 ist bei Butadienpolymerisaten nicht erforderlich, da Butadien unter geeigneten Bedingungen selbst vernetzend wirkt.

Bevorzugte ASA-Polymerisate C enthalten ein Pfropfcopolymerisat aufgebaut aus
p1) 50 bis 90 Gew.-% einer Pfropfgrundlage auf Basis von
   p11)95 bis 99,9 Gew.-% eines C₂₋₁₀-Alkylacrylats und
   p12) 0,1 bis 5 Gew.-% eines polyfunktionellen, vorzugsweise difunktionellen Monomeren mit mindestens zwei olefinischen, nicht konjugierten Doppelbindungen, und
p2) 10 bis 50 Gew.-% einer Pfropfauflage aus
   p21) 50 bis 90 Gew.-% Styrol oder substituierten Styrolen der allgemeinen Formel IV oder deren Mischungen, und
   p22) 10 bis 50 Gew.-% Acrylnitril oder Methacrylnitril oder deren Mischungen.

Bei der Komponente p1) handelt es sich um ein Elastomer, welches eine Glasübergangstemperatur von unter -20°C, insbesondere unter -30°C, aufweist.

Als Monomere für die Herstellung des Elastomeren werden als Hauptmonomere p11) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht p11 + p12, eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen, bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Als besonders vorteilhaft hat sich in einigen Fällen die Herstellung durch Emulsionspolymerisation erwiesen.

Der Anteil der Pfropfgrundlage p1) am Pfropfpolymerisat P beträgt im allgemeinen 50 bis 90, vorzugsweise 55 bis 85 und insbesondere 60 bis 80 Gew.%, bezogen auf das Gesamtgewicht von P.

Auf die Pfropfgrundlage p1) ist eine Pfropfhülle p2) aufgepfropft, die durch Copolymerisation von
p21) 50 bis 90, vorzugsweise 60 bis 90 und insbesondere 65 bis 80 Gew.-% Styrol oder substituierten Styrolen der allgemeinen Formel (IV),
   und
p22) 10 bis 50, vorzugsweise 10 bis 40 und insbesondere 20 bis 35 Gew-% Acrylnitril oder Methacrylnitril oder deren Mischungen
erhältlich ist.

Die Pfropfhülle p2) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-C 12 60 118 beschrieben ist.

Je nach den gewählten Bedingungen entsteht bei der Pfropfmischpolymerisation ein bestimmter Anteil an freien Copolymerisaten von Stryrol und Acrylnitril.

Zum Pfropfpolymerisat P zählen im allgemeinen auch die bei der Pfropflnischpolymerisation zur Herstellung der Komponente p2) entstehenden freien, nicht gepfropften Homo- und Copolymerisate, deren Anteil an der Komponente P von den Bedingungen bei der Herstellung der Pfropfauflage abhängt.

Nachstehend seien einige bevorzugte Pfropfpolymerisate angeführt:
p1): 65 Gew.-% Pfropfgrundlage p31) aus
   p311) 98 Gew.-% n-Butylacrylat und
   p312) 2 Gew.-% Dihydroxydicyclepentadienylacrylat und
      35 Gew.-% Pfropfhülle p32) aus
   p321) 70 Gew.-% Styrol und
   p322) 30 Gew.-% Acrylnitril
p2): Pfropfgrundlage wie bei p31) mit 5 Gew.-% einer Pfropfhülle aus
   p421) 12,5 Gew.-% Styrol (1. Pfropfstufe) und
      35 Gew.-% einer zweiten Pfropfstufe aus
   p4211) 70 Gew.-% Styrol und
   p4212) 30 Gew.-% Acrylnitril
p3): Pfropfgrundlage wie bei p31) mit 13 Gew.-% einer ersten Pfropfstufe aus Styrol und 27 Gew.-% einer zweiten Pfropfstufe aus Styrol und Acrylnitril im Gewichtsverhältnis 3:1.

Als Komponente P' enthalten die bevorzugten ASA-Polymerisate ein Copolymerisat aus
p'1) 50 bis 90, vorzugsweise 55 bis 90 und insbesondere 65 bis 85 Gew.-% Styrol und/oder substituierten Styrolen der allgemeinen Formel (IV) und
p'2) 10 bis 50, vorzugsweise 10 bis 45 und insbesondere 15 bis 35 Gew.-% Acrylnitril und/oder Methacrylnitril.

Derartige Produkte können z.B. nach dem in den DE-A 10 01 001 und DE-A 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50 000 bis 500 000, insbesondere von 100 000 bis 250 000.

Das Gewichtsverhältnis von Pfropfcopolymerisat P und Copolymerisat P' in den ABS- und ASA-Polymeren liegt im allgemeinen im Bereich von 20:80 bis 80:20, vorzugsweise von 30:70 bis 70:30.

ASA-Polymerisate sind unter der Bezeichnung Luran® S und ABS-Polymerisate unter der Bezeichnung Terluran® jeweils von BASF Aktiengesellschaft erhältlich.

### Komponente D

Der Anteil der Komponente D des thermoplastischen Styrolpolymerisats, das der gegenüber Carboxylgruppen reaktionsfähige funktionelle Gruppen aufweist, beträgt an den erfindungsgemäßen Formmassen 1 bis 10, vorzugsweise 1,5 bis 8, insbesondere 3 bis 6 Gew.-%.

Vorzugsweise weist Komponente D Epoxy- und/oder Oxazolingruppen auf.

Bevorzugte funktionalisierte Styrolpolymerisate sind aus folgenden Komponenten aufgebaut:
d1) 40 bis 99 Gew.-% Styrol und/oder α-Methystyrol;
d2) 0 bis 50 Gew.-% Acrylnitril, Methacrylnitril und/oder Methylmethacrylat;
d3) 1 bis 40 Gew.-% eines Epoxygruppen oder Oxazolingruppen enthaltenden Monomeren;
d4) 0 bis 5 Gew.-% sonstiger radikalisch polymerisierbarer Monomerer.

Beispiele für Epoxygruppen oder Oxazolingruppen enthaltende Monomere D3) sind Glycidylmethacrylat, Glycidylacrylat, Vinyloxazolin und Isopropenyloxazolin. Als sonstige Monomere d4) kommen z.B. Vinylester und Vinylether in Betracht.

### Komponente E

Neben den Komponenten A bis D können die erfindungsgemäßen Formmassen auch 0 bis 50, vorzugsweise 0 bis 30 Gew.-% mindestens eines schlagzähmodifizierenden Kautschuks E enthalten.

Bevorzugte kautschukelastische Polymerisate sind Polymerisate auf Basis von Olefinen, die aus folgenden Komponenten aufgebaut sind:
e1) 40 bis 100 Gew.-% mindestens eines α-Olefins mit 2 bis 8 C-Atomen,
e2) 0 bis 50 Gew.-% eines Diens,
e3) 0 bis 45 Gew.-% eines C₁₋₁₂-Alkylesters der Acrylsäure oder Methacrylsäure oder Mischungen derartiger Ester,
e4) 0 bis 40 Gew.-% einer ethylenisch ungesättigten Mond oder Dicarbonsäure oder eines funktionellen Derivats einer solchen Säure,
e5) 0 bis 40 Gew.-% eines Epoxygruppen enthaltenden Monomeren,
e6) 0 bis 5 Gew.-% sonstiger radikalisch poylmerisierbarer Monomerer, mit der Maßgabe, daß die Komponente E kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere e2) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclo-hexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo [5.2.1.0^{2.6}]-3,8-decadien oder deren Mischungen genannt. Bevorzugt werden Hexa-1,5-dien, 5-Ethyliden-norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von α-Olefinen mit 2-8 C-Atomen, insbesondere des Ethylens, mit C₁₋₁₈-Alkylestern der Acrylsäure und/oder Methacrylsäure.

Grundsätzlich eignen sich alle primären und sekundären C₁₋₁₈-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-Butyl, i-Butyl- und 2-Ethylhexyl-, Ocryl- und Decylacrylate bzw. die entsprechenden Ester der Methacrylsäure. Von diesen werden n-Butylacrylat und 2-Ethylhexylacrylat besonders bevorzugt.

Anstelle der Ester e3) oder zusätzlich zu diesen können in den Olefinpolymerisaten auch säurefünktionelle und/oder latent säurefunktionelle Monomere ethylenisch ungesättigter Mono- oder Dicarbonsäuren e4) oder Epoxygruppen aufweisende Monomere e5) enthalten sein.

Als Beispiele für Monomere e4) seien Acrylsäure, Methacrylsäure, tertiäre Alkylester dieser Säuren, insbesondere tert.-Butyl-acrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁₋₁₂-Alkylester der vorstehend genannten Säuren, insbesondere tert.-Butylacrylat und tert.-Butylmethacrylat angeführt.

Die säurefurktionellen bzw. latent säurefunktionellen Monomeren und die Epoxygruppen-enthaltenden Monomeren werden vorzugsweise durch Zugabe von Verbindungen der allgemeinen Formeln (IX) bis (XIII) zum Monomerengemisch in die Olefinpolymerisate eingebaut. 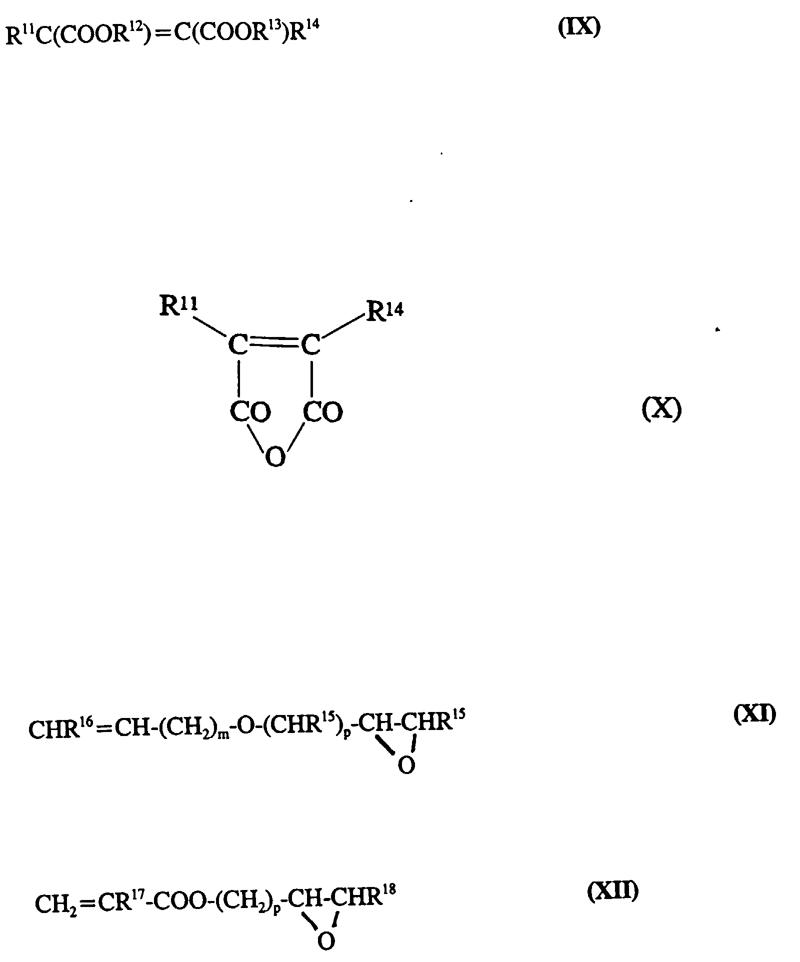 wobei die Reste R¹¹⁻¹⁸ Wasserstoff oder Alkylgruppen mit 1 bis 6 C-Atomen darstellen und m eine ganze Zahl von 0 bis 20 und p eine Zahl von 0 bis 10 ist.

Bevorzugt für R¹¹⁻¹⁸ ist Wasserstoff, für m der Wert 1 oder 2 und für p der Wert 1. Die entsprechenden Verbindungen sind Maleinsäure, Fumarsäure, Maleinsäureanhydrid e4) bzw. Alkenyl-glycidylether oder Vinylglycidylether e5).

Bevorzugte Verbindungen der Formeln (IX), (X), (XI) und (XII) sind Maleinsäure und Maleinsäureanhydrid als Komponente e4) und Epoxygruppen-enthaltende Ester der Acrylsäure und/oder Methacrylsäure, wobei Glycidylacrylat und Glycidylmethacrylat (als Komponente e5) besonders bevorzugt werden.

Der Anteil der Komponenten e4) bzw. e5) beträgt bei Vorliegen jeweils 0,07 bis 40 Gew.-%, insbesondere 0,1 bis 20 und besonders bevorzugt 0,15 bis 15 Gew.%, bezogen auf das Gesamtgewicht der Olefinpolymerisate.

Besonders bevorzugt sind Olefinpolymerisate aus
- 50 bis 98,9: insbesondere 60 bis 95 Gew.-% Ethylen,
- 0,1 bis 20,0: insbesondere 0,15 bis 15 Gew.-% Glycidylacrylat, Acrylsäure und/oder Maleinsäureanhydrid, 1 bis 45,0 insbesondere 4,85 bis 35 Gew.-% n-Butylacrylat und/oder 2-Ethyl-hexylacrylat.

Weitere bevorzugte Ester der Acryl- und/oder Methacrylsäure sind die Methyl-, Ethyl-, Propyl- und i-Butylester.

Als sonstige Monomere e6) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Außer den vorstehenden bevorzugten kautschukelastischen Polymerisaten auf Basis von Olefinen eignen sich als Elastomere E beispielsweise Emulsionspolymerisate, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomeren für die Herstellung der Elastomeren seien Acrylate wie n-Butylacrylat und 2-Ethylhexylacrylat, entsprechende Methacrylate, sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Vorteilhaft ist die Verwendung von Emulsionspolymerisaten, die an der Oberfläche reaktive Gruppen aufweisen. Derartige Gruppen sind z.B. Epoxy-, Carboxyl-, latente Carboxyl-, Amino- oder Amidgruppen.

Auch die in der EP-A-0 208 187 beschriebenen Pfropfmonomeren sind zur Einführung reaktiver Gruppen an der Oberfläche geeignet.

Weiterhin können die Emulsionspolymerisate ganz oder teilweise vernetzt sein. Als Vernetzer wirkende Monomere sind beispielsweise Buta-1,3-dien, Divinylbenzol, Diallylphtalat und Dihydrodicyclopentadienylacrylat sowie die in der EP-A-0 050 165 beschriebenen Verbindungen.

Ferner können pfropfvernetzende Monomere verwendet werden, d.h. Monomere mit zwei oder mehr polymerisierbaren Doppelbindungen; die bei der Polymerisation mit unterschiedlichen Geschwindigkeiten reagieren.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US 4,148,846 verwiesen.

Im allgemeinen beträgt der Anteil dieser vernetzenden Monomeren an der Komponente E bis zu 5 Gew.-%, vorzugsweise nicht mehr als 3 Gew.-%, bezogen auf E.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere und Pfropfpolymerisate mit einem inneren Kern aus n-Butylacrylat und einer äußeren Hülle aus den vorstehend genannten Copolymeren.

Die beschriebenen Elastomere E können auch nach anderen üblichen Verfahren, z.B. durch Suspensionspolymerisation, hergestellt werden.

Des weiteren können auch Pfropfkautschuke auf Siloxan-Basis verwendet werden.

Geeignete Siloxankerne können beispielsweise ausgehend vom cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel® (Du Pont), Arnitel®(Akzo) und Pelprene®(Toyobo Co. Ltd.) erhältlich.

Geeignete Schlagzähmmodifier sind auch thermoplastische Polyurethan-Elastomere. Deren Herstellung ist dem Fachmann bekannt.

Selbstverständlich können auch Mischungen verschiedener Kautschuke eingesetzt werden.

### Komponente F

Neben den Komponenten A bis E können die erfindurgsgemäßen Formmassen noch Verstärkungsmittel und/oder Füllstoffe enthalten. Als Komponente F können die erfindungsgemäßen Formmassen 0 bis 60 vorzugsweise 0 bis 30 Gew.-% faser- oder teilcherförmige Füllstoffe oder Verstärkungsstoffe oder deren Mischungen enthalten.

Bevorzugte faserförmige Füll- oder Verstärkungsstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgaßteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich vor allem amorphe Kieselsäure, Magnesiumcarbonat, Kreide, gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

### Komponente G

Neben den Komponenten A bis E können die erfindungsgemäßen Formmassen übliche Zusatzstoffe und Verarbeitungshilfsmittel G enthalten. Deren Anteil beträgt im allgemeinen 0 bis 50, vorzugsweise von 0 bis 30 Gew.-%, bezogen auf das Gesamtgewicht der Komponenten A bis G.

Übliche Zusatzstoffe sind beispielsweise Stabilisatoren und Oxidationsverzögerer, Mittel gegen Wärmezersetzung und Zersetzung durch ultraviolettes Licht, Gleitund Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃Pb(OH)₂), Lithopone, Antimonweiß und Titandioxid. Von den beiden gebräuctuichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr, Fe)₂O₄), Manganschwarz (Mischung aus Mangandioxid, Siliciumdioxid und Eisenoxid), Kobaltschwarz und Antimonschwarz sowie besonders bevorzugt Raß, der meist in Form von Furnaceoder Gasruß eingesetzt wird (siehe hierzu G. Benzing, Pigmente für Anstrichmittel, Expert-Verlag (1988), S. 78 ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemaß der Erfindung zugesetzt werden können, sind z.B. Halogenide von Metallen der Gruppe I des Periodensystems, z.B. Natrium-, Kalium-, LithiumHalogenide, ggf. in Verbindung mit Kupfer-(I)-Halogeniden, z.B. Chloriden, Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzothazole und Benzophenone, die im allgemeinen in Mengen bis zu 2 Gew.-% eingesetzt werden.

Gleit- und Entformungsmittel, die in der Regel in Mengen bis zu 1 Gew.-% der thermopastischen Formmasse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Die erfindungsgemäßen Formmassen können ferner 0,1 bis 10, vorzugsweise 0,15 bis 7,5, besonders bevorzugt 0,2 bis 5 Gew.-% eines Antitropfmittels enthalten.

Das Antitropfmittel kann dabei eine Einzelverbindung oder ein Gemisch von Verbindungen sein. Vorzugsweise werden als Antitropfmittel Teflon oder hochmolekulare Copolymerisate verwendet.

### Herstellung der Formmassen

Die erfindungsgemäßen Formmassen werden durch Mischen der Komponenten A bis C und gegebenenfalls D bis G hergestellt.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 230 bis 380°C, bevorzugt 240 bis 330°C erforderlich.

Die erfindungsgemäßen thermoplastischen Formmassen können nach den bekannten Verfahren der Thermoplastverarbeitung bearbeitet werden, beispielsweise durch Extrudieren, Spritzgießen, Kalandrieren, Hohlkörperblasen, Pressen oder Sintern.

Die erfindungsgemäßen Formmassen werden zur Herstellung von Fasern, Folien oder Formkörpern verwendet. Die Erfindung betrifft auch Fasern, Folien oder Formkörper aus einer wie vorstehend beschriebenen Formmasse. Diese Fasern, Folien oder Formkörper werden vorzugsweise durch Extrudieren, Extrusionsblasen oder Spitzgießen hergestellt. Bei den Formkörpern handelt es sich dabei insbesondere um Haushaltsartikel, Teile elektronischer Bauteile oder Geräte, Bauteile aus dem Kraftfahrzeugbereich oder Bauteile von medizinischtechnischen Geräten.

Dabei zeichnen sich die Formmassen durch hohe Wärmeformbeständigkeit, gute Zähigkeit, gute Fließfähigkeit und verbessertes Brandschutzverhalten aus. Diese Eigenschaften finden sich auch in den Formkörpern, Fasern und Folien wieder.

Die Erfindung wird nachstehend durch Beispiele näher erläutert.

### BEISPIELE

Die Viskositätszahl der Produkte wird in 1 %-iger Lösung von N-Methylpyrrolidon (NMP) bei 25°C bestimmt. Der Anteil der Einheiten mit Säuregruppen in den Copolyarylethern B) wurde wie bei I.W. Parsons et al., Polymer 34, 2836 (1993) beschrieben, durch ¹H-NMR-Spektroskopie ermittelt.

### Komponente A

Als Polyarylether A wurde Ultrason® S 2010 (Handelsprodukt der BASF AG) verwendet. Dieses Produkt ist charakterisiert durch eine Viskositätszahl von 56 ml/g, gemessen m 1%-iger NMP-Lösung bei 25°C.

### Komponente B1

Unter Stickstoffatmosphäre wurden 5,742 kg Dichlordiphenylsulfon, 4,374 kg Bisphenol A und 112 g 4,4'-Di-hydroxyvaleriansäure in 29 kg N-Methylpyrrolidon gelöst und mit 2,820kg wasserfreiem Kaliumcarbonat versetzt.

Die Reäktionsmischung wurde bei einem Druck von 300 mbar unter ständigem Abdestillieren des Reaktionswassers und N-Methylpyrrolidon zunächst 1 h auf 180°C erhitzt und dann 6h bei 190°C weiter umgesetzt.

Nach Zugabe von 40 kg N-Methylpyrrolidon wurden die anorganischen Bestandteile abfiltriert. Durch Zugabe von 50 ml Eisessig wurden basische Gruppen neutralisiert, anschließend wurde das Polymer durch Fällung in Wasser isoliert. Nach 3-maliger Extraktion mit Wasser wurde das Produkt bei 240°C unter vermindertem Druck getrocknet. Es wurde ein weißes Pulver erhalten.

Der Anteil an Einheiten mit Säuregruppen wurde mittels H-NMR zu 1,2 mol-% bestimmt, die Viskositätszähl des Produkts betrug 38,1 ml/g.

### Komponente B2

Unter Stickstoffatmosphäre wurden 5,742 kg Dichiordiphenylsulfon, 4,240 kg Bisphenol A und 280 kg 4,4'-Di-hydroxyvaleriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 150 ml Eisessig wurden basische Gruppen neutralisiert, anschließend wurde das Polymer durch Fällung in Wasser isoliert. Nach 3-maliger Extraktion mit Wasser wurde das Produkt bei 140°C unter vermindertem Druck getrocknet. Es wurde ein weißes Pulver erhalten.

Der Anteil an Einheiten mit Säuregruppen wurde mittels H-NMR zu 3,1 mol-% bestimmt, die Viskositätszahl des Produkts betrug 37,1 ml/g.

### Komponente C1

ASA-Copolymer, enthaltend 42 Gew.-% eines Pfropfcopolymeren mit 60 Gew.-% einer Pfropfgrundlage aus 98 Gew.-% n-Butylacrylat und 2 Gew.-% eines polyfunktionellen Monomeren (Dihydrodicyclopentadienyldiacrylat) und 40 Gew.-% einer darauf aufgepfropften Mischung aus Styrol und Acrylnitril im Gewichtsverhältnis 75/25 sowie 58 Gew.-% eines Styrol/Acrylnitril (75/25 Gewichtsverhältnis)-Copolymerisats, charakterisiert durch einen Schmelzindex (MFI) von 8 g/10 min bei 200°C/21,6 kg (nach DIN 53 735) und einen E-Modul von 2300 N/mm² (bestimmt nach DIN 53 457).

### Komponente C2

ABS-Copolymer enthaltend 43 Gew.-% eines Pfroplcopolymeren mit einem Polybutadienkern (60 Gew.-%) und eine darauf aufgepfropfte Styrol/AcrylnitrilHülle (40 Gew.-%, Gewichtsverhältnis Styrol/Acrylnitril 75:25) sowie 57 Gew.-% eines Styrol/Acrylnitril-Copolymerisats mit 75 Gew.-% Styrol und 25% Acrylnitril, charakterisiert durch einen Schmelzindex (MFI) von 8g/10 min bei 200°C/21,6 kg (nach DIN 53 735) und einen E-Modul von 1900 N/mm² (bestimmt nach DIN 53 457).

### Komponente D1

Styro-Acrylnitril-Isopropenyloxazolin-Copolymer (74/25/1 Gew.-%), z.B. Epocros® RAS 1005 der Nippon Shokubei.

### Komponente D2

Styrol-Acrylnitril-Glycidmethacrylat-Copolymer (74/25/1 Gew.-%), mit einer Viskositätszahl von 80 ml/g, hergestellt durch kontinuierliche Massepolymerisation.

### Komponente G

Talk, z.B. IT-Extra, charakterisiert durch einen d₅₀-Wert von 4,7 µm.

### Herstellung und Prüfung der Formmassen

Die Komponenten wurden in einem Zweiwellenextruder bei einer Massetemperatur von 270 bis 300°C gemischt. Die Schmelze wurde durch ein Wasserbad geleitet und granuliert.

Die Polysulfon enthaltenden Formmassen wurden bei einer Massetemperatur von 270°C verarbeitet, die Formtemperatur war 100°C.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigetung von 50 K je Stunde, an Normkleinstäben ermittelt.

Die Schlagzafugkeiten der Produkte wurden an ISO-Stäben nach ISO 179 1eA bestimmt.

Die Schädigungsarbeit wurde an Rundscheiben nach DIN 53 443 bei Raumtemperatur ermittelt.

Die Feuchtigkeitsaufnahme wurde gravimetrisch nach Lagerung der Probekörper bei 23°C in Wasser ermittelt. Zur Bestimmung der Blisterfestigkeit wurden feuchte Testkästchen in einem vorgewärmten Umluftofen gelagert und anschließend visuell begutachtet. Ermittelt wurde die Temperatur (T_{b}) bei der erstmals Blasen auftraten. Die Zusammensetzungen der Formmassen 1 bis 5 und Vergleichsformmassen V1 bis V5 und die Ergebnisse der Prüfungen sind in Tabelle 1 aufgeführt.

**Tabelle 1**

| Beispiel | V1 | 1 | 2 | 3 | V2 | V3 | 4 | V4 | V5 | 5 |
|---|---|---|---|---|---|---|---|---|---|---|
| Komponente [Gew.-%] | | | | | | | | | | |
| A | 70 | 65 | 65 | 65 | 65 | 60 | 60 | 40 | 60 | 50 |
| B₁ | - | 5 | | - | - | 5 | 5 | 25 | - | 10 |
| B₂ | - | - | 5 | 5 | - | - | - | - | - | - |
| C1 | 30 | 26 | 26 | 26 | - | - | - | - | - | - |
| C2 | - | - | - | - | 35 | 35 | 30 | 30 | 30 | 25 |
| D1 | - | 4 | 4 | - | - | - | 5 | 5 | - | 5 |
| D2 [°C] | - | - | - | 4 | - | - | - | - | - | - |
| G | - | - | - | - | - | - | - | - | 10 | 10 |
| Vicat B [°C] | 172 | 173 | 173 | 172 | 167 | 167 | 167 | 166 | 169 | 170 |
| aₖ [kJ/m^{2]} | 11,7 | 21,3 | 26 | 23,1 | 14,6 | 13,4 | 31,0 | 15,1 | 5,4 | 12,3 |
| Wₛ [Nm] | 32 | 56 | 58,9 | 52,6 | 27,3 | 26,1 | 56,1 | 23 | 2,7 | 43 |
| Feuchtgehalt [%] | 0,85 | 0,83 | 0,83 | 0,82 | 0,79 | 0,77 | 0,77 | 0,76 | 0,67 | 0,69 |
| T_{b}[°C] | 110 | 125 | 130 | 125 | 110 | 110 | 120 | 110 | 115 | 130 |
| V1 - V5: Vergleichsversuche | | | | | | | | | | |

Wie die Versuche zeigen, wird die Verträglichkeit zwischen Polyarylethern und den Styrolcopolymeren durch Zugabe der reaktiven Polyarylether/Styrolcopolymere signifikant verbessert. Diese Verbesserung wirkt sich auf die Zähigkeit sowie auf die Blistertemperatur der Produkte aus.

## Patentansprüche

1. Formasse, enthaltend, bezorgen auf das Gesamtgewicht der Komponenten A bis D und gegebenenfalls E bis G, das insgesamt 100 Gew.-% ergibt,
a: 1 bis 97 Gew.-% mindestens eines Polyarylenethers, der wiederkehrende Einheiten der allgemeinen Formel (I) 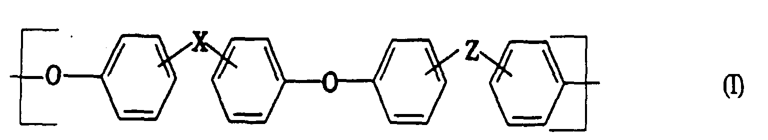 oder entsprechenden mit C₁₋₆-Alkyl, C₁₋₆-Alkoxy, Aryl, Chlor oder Fluor kernsubstituierten Einheiten, wobei
-X- -SO₂-, -SO-, -O-, -CO-, -N=N-, -RC=CR^{a}-, CR^{b}R^{c}- oder eine chemische Bindung sein kann und
-Z- ausgewählt ist aus
SO₂, -SO-, -CO-
-N=N- und -RC=CR^{a}-,
wobei
R und R^{a} jeweils Wasserstoff oder C₁₋₆-Alkyl darstellen,
R^{b} und R^{c} jeweils Wasserstoff oder C₁₋₆-Alkyl, C₄₋₁₀-Cycloalkyl, C₁₋₆-Alkoxy oder Aryl oder jeweils deren Fluor- oder Chlorderivate sein können,
enthält, als Komponente A,
b: 1 bis 20 Gew.-% mindestens eines Carboxylgruppen enthaltenden Polyarylenethers als Komponente B,
c: 1 bis 97 Gew.-% mindestens eines thermoplastischen Styrolcopolymerisats als Komponente C,
d: 1 bis 10 Gew.-% mindestens eines thermoplastischen Styrolcopolymerisats, das gegenüber Carboxylgruppen reaktionsfähige funktionelle Gruppen aufweist, als Komponente D,
e: 0 bis 50 Gew.-% mindestens eines schlagzähmodifizierenden Kautschuks als Komponente E,
f: 0 bis 60 Gew.-% Verstärkungsmittel und/oder Füllstoffe als Komponente F und
g: 0 bis 50 Gew.-% weiterer Zusatzstoffe als Komponente G.

2. Formmasse nach Anspruch 1, dadurch gekennzeichnet, daß die Polyarylenether der Komponente A
a1) 0 bis 100 Mol-% wiederkehrende Einheiten der Formel (II) 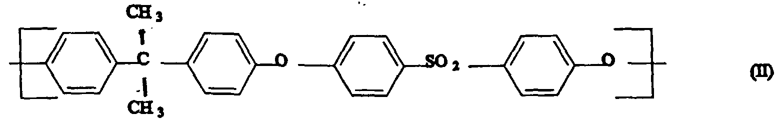
a2) 0 bis 100 Mol-% wiederkehrende Einheiten der 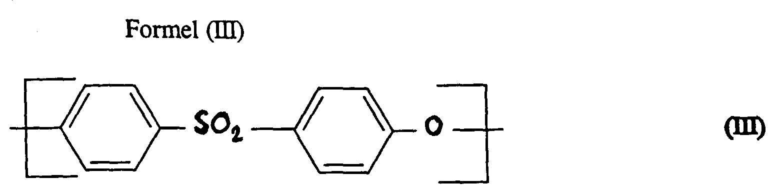 enthalten.

3. Thermoplastische Formmasse nach Anspruch 1 oder 2, dadurch gekennzeichnet, daß der Carboxylgruppen enthaltende Polyarylenether der Komponente B wiederkehrende Strukturelemente der allgemeinen Formeln V und/oder VI 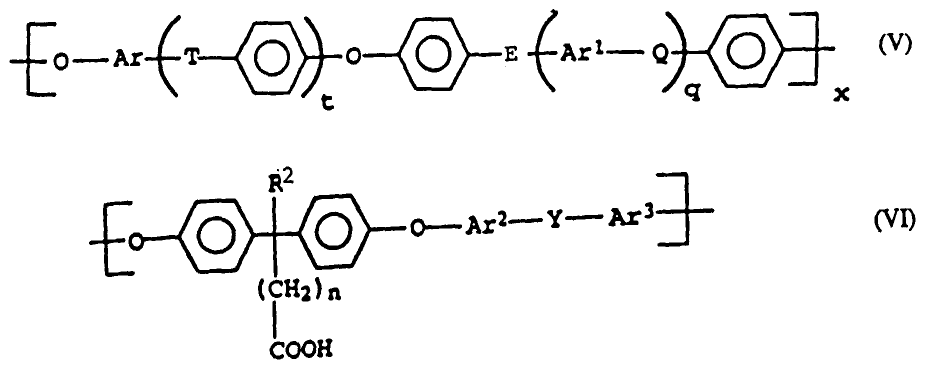 umfaßt, worin
x für 0,5 oder 1 steht,
t und q unabhängig voneinander für 0, 1, 2 oder 3 stehen,
n für eine ganze Zahl von 0 bis 6 steht,
-Q-, -T-, -Y- und -E- unabhängig voneinander jeweils eine chemische Bindung oder eine Gruppe, ausgewählt unter -O-, -S--SO₂-, S=O, C=O, -N=N-, -R^{d}C=CR^{e}- und -CR^{f}R^{g}-, bedeuten, wobei
R^{d} und R^{e} unabhängig voneinander jeweils für ein Wasserstoffatom oder C₁₋₁₂-Alkyl, C₁₋₁₂-Alkoxy oder C₆₋₁₈-Aryl stehen, wobei R^{f} und R^{g} gegebenenfalls unabhängig voneinander mit Fluor- und/oder Chloratomen substituiert sind oder gegebenenfalls zusammen mit dem C-Atom, an das sie gebunden sind, eine C₃₋₁₂-Cycloalkylgruppe bilden, die gegebenenfalls mit einer oder mehreren C₁₋₆-Alkylgruppen substituiert ist, mit der Maßgabe, daß mindestens eine der Gruppen T, Q und E für -SO₂- oder C=O steht und, wenn t und q für 0 stehen, E für -SO₂- oder C=O steht,
Ar, Ar¹, Ar² und Ar³ unabhängig voneinander für C₆₋₁₈-Arylen stehen, wobei diese gegebenenfalls mit C₁₋₁₂-Alkyl, C₆₋₁₈-Aryl, C₁₋₁₂-Alkoxy oder Halogenatomen substituiert sind,
R¹ für H, C₁₋₆-Alkyl, oder -(CH₂)ₙ-COOH steht; und
wobei das molare Verhältnis von Einheiten der Formel V zu Einheiten der Formel VI im Bereich von 0,05:99,95 bis 99,95:0,05 liegt.

4. Formasse nach einem der Ansprüche 1 bis 3, dadurch gekennzeichnet, daß das Styrolcopolymerisat der Komponente D Epoxy- und/oder Oxazolingruppen aufweist.

5. Formmasse nach einem der Ansprüche 1 bis 4, dadurch gekennzeichnet, daß Komponente C ein SAN-, ABS- und/oder ASA-Copolymerisat ist.

6. Verfahren zur Herstellung von Formmassen nach einem der Ansprüche 1 bis 5 durch Mischen der Komponenten A bis D und gegebenenfalls E bis G.

7. Verwendung von Formmassen nach einem der Ansprüche 1 bis 5 zur Herstellung von Fasern, Folien oder Formkörpern.

8. Fasern, Folien oder Formkörper aus einer Formmasse nach einem der Ansprüche 1 bis 5.

9. Verwendung nach Anspruch 7 oder Formkörper nach Anspruch 8, dadurch gekennzeichnet, daß die Formkörper Haushaltsartikel, Teile elektronischer Bauteile oder Geräte, Bauteile aus dem Kraftfahrzeugbereich oder Bauteile von medizinisch-technischen Geräten sind.

10. Verfahren zur Herstellung von Fasern, Folien oder Formkörpern nach Anspruch 8 oder 9 durch Extrudieren, Extrusionsblasen oder Spritzgießen.
